# EUROPÄISCHE PATENTANMELDUNG

(11) **EP 4 797 502 A1**
(43) Veröffentlichungstag der Anmeldung: **26.08.2026**
(21) Anmeldenummer: 25159826.4
(22) Anmeldetag: 25.02.2025
(51) Int. Cl.: H02K 1/14, H02K 15/022, H02K 21/24, H02K 3/12

(54) **BLECHPAKET FÜR EINE ELEKTRISCHE MASCHINE, SPULENBAUGRUPPE, VERFAHREN ZUM HERSTELLEN EINES SOLCHEN BLECHPAKETS UND ELEKTRISCHE MASCHINE MIT EINEM SOLCHEN BLECHPAKET**

(71) Anmelder: Universität Stuttgart, 70174 Stuttgart (DE)
(72) Erfinder: Schäfer, Adrian Lukas, 70736 Fellbach (DE); Weigel, Steffen, 70374 Stuttgart (DE); Parspour, Nejila, 70839 Gerlingen (DE)
(74) Vertreter: Patentanwälte Ruff, Wilhelm, Beier, Dauster & Partner mbB

(57) **Zusammenfassung**

Eine elektrische Maschine weist in Umfangsrichtung an einem Stator angeordnete Statorspulen auf, die jeweils eine sich in einer Axialrichtung durch die Statorspule erstreckende Innenöffnung aufweisen. Sie weist Statorblechpakete auf, die aus einer Vielzahl von Statorblechen bestehen, die in einer Radialrichtung aufeinandergestapelt sind. Jeweils eine Statorspule ist um jeweils ein Statorblechpaket herumgewickelt. Eine Azimutrichtung verläuft senkrecht zur Axialrichtung und zur Radialrichtung. Zumindest ein Teil der Statorbleche des Statorblechpakets steht mit Überstandsbereichen in der Axialrichtung an beiden Enden der Statorspule aus der Innenöffnung heraus, wobei die Statorbleche an diesem Ende in ihrer Blechebene mit den Überstandsbereichen auch in der Azimutrichtung über die Innenöffnung überstehen und die Statorspule überdecken. Mindestens ein Statorblech, das in Radialrichtung ganz außen und/oder ganz innen am Statorblechpaket angeordnet ist, weist einen Überstandsbereich auf, der an beiden Enden in Azimutrichtung über die Statorspule verlängert ist mit abstehenden Flügelabschnitten, die umgebogen sind und in Azimutrichtung zurücklaufen und in Radialrichtung nach radial außen oder nach radial innen außerhalb der Innenöffnung liegen und die Statorspule überdecken.

## Beschreibung

### ANWENDUNGSGEBIET UND STAND DER TECHNIK

Die Erfindung betrifft ein Blechpaket für eine elektrische Maschine, insbesondere Elektromotor oder Generator, mit einem Rotor und einem Stator, sowie eine Spulenbaugruppe mit mindestens einer Spule und mit mindestens einem Blechpaket. Die elektrische Maschine ist mit mindestens einem solchen Blechpaket oder einer Spulenbaugruppe aufgebaut. Die Erfindung betrifft auch ein Verfahren zum Herstellen eines solchen Blechpakets und eine solche elektrische Maschine.

Bekannt ist ein Stator mit einem solchen Blechpaket aus der US 2022/0200417 A1, bei der ein Stator ein Statorblechpaket aufweist, das anstelle eines Stapels aus mehreren Statorblechen durchgängig durch vielfache Faltung hergestellt ist.

Aus der US 2024/0055912 A1 ist ein weiterer Stator mit einem solchen Blechpaket bekannt, bei dem abstehende Bereiche des Blechpakets durch angeklebte abstehende getrennte Teil-Statorbleche gebildet werden.

### AUFGABE UND LÖSUNG

Der Erfindung liegt die Aufgabe zugrunde, ein eingangs genanntes Blechpaket, eine eingangs genannte Spulenbaugruppe, ein Verfahren zum Herstellen eines solchen Blechpakets sowie eine elektrische Maschine mit mindestens einem solchen Blechpaket zu schaffen, mit denen Probleme des Standes der Technik gelöst werden können und es insbesondere möglich ist, eine elektrische Maschine mit möglichst hohem Drehmoment bzw. möglichst hoher Effizienz zu schaffen.

Gelöst wird diese Aufgabe durch ein Blechpaket mit den Merkmalen des Anspruchs 1, durch eine Spulenbaugruppe mit den Merkmalen des Anspruchs 12, durch ein Verfahren zum Herstellen eines solchen Blechpakets mit den Merkmalen des Anspruchs 13 sowie durch eine elektrische Maschine mit den Merkmalen des Anspruchs 14 oder 15. Vorteilhafte sowie bevorzugte Ausgestaltungen der Erfindung sind Gegenstand der weiteren Ansprüche und werden im Folgenden näher erläutert. Dabei werden manche Merkmale nur für das Blechpaket, nur für die Spulenbaugruppe, nur für das Verfahren zur Herstellung eines solchen Blechpakets oder nur für die elektrische Maschine beschrieben. Sie sollen jedoch unabhängig davon sowohl für ein solches Blechpaket als auch für ein Verfahren zu dessen Herstellung, für eine solche Spulenbaugruppe und eine elektrische Maschine selbständig und unabhängig voneinander gelten können. Der Wortlaut der Ansprüche wird durch ausdrückliche Bezugnahme zum Inhalt der Beschreibung gemacht.

Das Blechpaket kann zum Aufbau einer Spulenbaugruppe bzw. eines Stators und/oder eines Rotors in einer allgemeinen elektrischen Maschine eingebaut bzw. verwendet werden, insbesondere in einen Elektromotor oder Generator, die diesen Stator und einen Rotor aufweist. Ein Stator mit mindestens einem erfindungsgemäßen Blechpaket hat in einer Umfangsrichtung, die in einer Azimutrichtung verlaufen kann, eine oder mehrere am Stator angeordnete Statorspulen. Für einen Rotor gilt technisch das entsprechende, er kann auch eine oder mehrere am Rotor angeordnete Rotorspulen aufweisen, weswegen im Folgenden überwiegend von Spule gesprochen wird. Dies meint beide Arten von Spulen und sämtliche Ausprägungen von Spulen, die mindestens ein Blechpaket aufweisen. Diese mindestens eine Spule weist jeweils eine Innenöffnung auf, die sich in einer Axialrichtung durch die Spule erstreckt bzw. ihre Verlaufsrichtung durch die Spule definiert die Axialrichtung. Der Stator oder der Rotor weist Blechpakete auf, die aus einer Vielzahl von Blechen bestehen, wobei die Bleche in einer Radialrichtung aufeinandergestapelt sind bzw. diese Stapel-Richtung die Radialrichtung definiert. Dabei ist jeweils eine Spule um jeweils oder mindestens ein Blechpaket herumgewickelt bzw. verläuft um diese herum. Vorteilhaft ist genau eine Spule um genau ein Blechpaket gewickelt, besonders vorteilhaft direkt darauf gewickelt. Dabei verläuft eine vorgenannte Azimutrichtung senkrecht zur Axialrichtung und zur genannten Radialrichtung. Die Axialrichtung und die Radialrichtung sind gemäß der vorgenannten Definition auf die Spule bezogen, was für einen Einbau in einen Stator einer Axialflussmaschine gilt. Bei Einbau in eine Radialflussmaschine sind diese Richtungen anders als für die Radialflussmaschine allgemein sonst geltend, was anhand eines Ausführungsbeispiels noch verdeutlicht wird. Sie treffen aber auch hier bezogen auf die Spule mit ihrer Innenöffnung zu.

Die Spulen müssen nicht zwangsweise um einen durch ein Blechpaket gebildeten Zahn als abstehender Abschnitt gewickelt sein. Der Begriff hierfür wäre Zahnspulenwicklung. Grundsätzlich kann die vorliegende Erfindung bei allen Spulenwickeltechniken mit Wickelköpfen einen Drehmomentvorteil für einen Elektromotor bringen, da der Bereich der Wickelköpfe dadurch besser genutzt werden kann. Dies können auch verteilte Wicklungen sein als Ganzlochwicklung oder Bruchlochwicklung sowie Wellenwicklungen und Formstab-Wicklungen, insbesondere Hairpin-Wicklungen. Es ist sehr vorteilhaft für die Erfindung, wenn Teile des Blechpakets den Wicklungskopf der Spule überdecken.

Zumindest ein Teil der Bleche des Blechpakets steht mit Überstandsbereichen in der Axialrichtung an mindestens einem Ende der Spule aus der Innenöffnung heraus, vorzugsweise an beiden Enden der Spule. Dadurch kann eine besonders gute Wirkung der Erfindung erreicht werden. Die Bleche stehen an diesem Ende in Richtung ihrer eigenen Blechebene mit den Überstandsbereichen auch in der Azimutrichtung über die Innenöffnung über und überdecken bzw. überragen die Spule bzw. ihren Wicklungskopf. So kann ein weiterer bzw. zusätzlicher magnetischer Fluss erreicht werden.

Erfindungsgemäß weist mindestens ein Blech, das in Radialrichtung ganz außen und/oder ganz innen am Blechpaket angeordnet ist, einen Überstandsbereich auf, der an mindestens einem Ende in Azimutrichtung noch über die Spule hinaus verlängert ist, wofür er einen abstehenden Flügelabschnitt aufweist bzw. in einen solchen Flügelabschnitt hinein verlängert ist. Dabei ist der Flügelabschnitt umgebogen und läuft in Azimutrichtung zurück, vorteilhaft zumindest zu seinem Endbereich hin in einer Ebene parallel zur Blechebene der Bleche in der Innenöffnung. Dieser umgebogene Flügelabschnitt liegt in Radialrichtung nach radial außen oder nach radial innen außerhalb der Innenöffnung und überdeckt die Spule bzw. deren Stirnfläche in dieser Richtung bzw. Radialrichtung, liegt also sozusagen vor der äußeren und inneren Stirnseite der Spule. Vorteilhaft sind es mehrere Bleche radial außen, ggf. auch radial innen, die solche Flügelabschnitte aufweisen.

Dieser überstehende mindestens eine Flügelabschnitt verbessert den magnetischen Fluss bzw. führt ihn in radial weiter außen verlaufende Bereiche, wodurch eine elektrische Maschine als Elektromotor ein höheres Drehmoment entwickeln kann.

In Ausgestaltung der Erfindung kann mindestens ein in Radialrichtung äußeres Blech und mindestens ein radial inneres Blech an seinen jeweils beiden Überstandsbereichen in Axialrichtung jeweils mindestens einen abstehenden Flügelabschnitt aufweisen, der wiederum die Umbiegung und den Verlauf zurück hat. So können möglichst viele Bereiche für die bessere Führung der Magnetfeldlinien geschaffen werden bzw. es kann eine Vergrößerung des Luftspalts erreicht werden. Vorzugsweise können zwischen 5% und 25% bzw. 2 bis 8 der radial äußeren und/oder der radial inneren Bleche an ihren beiden Überstandsbereichen in Axialrichtung jeweils mindestens einen abstehenden Flügelabschnitt aufweisen mit der Umbiegung und dem Verlauf zurück, um die Spule bzw. ihren Wicklungskopf zu überdecken.

In Ausgestaltung der Erfindung kann die Umbiegung des Flügelabschnitts einen Abschnitt aufweisen, der vom Überstandsbereich um 90° umgebogen ist und dann in Radialrichtung verläuft, bis er wieder um 90° umgebogen ist und in Azimutrichtung zurück läuft. Dadurch wird der Verlauf des Blechs mit seinem Flügelabschnitt verbessert.

In Ausgestaltung der Erfindung können die an einem Ende aus der Spule überstehenden Überstandsbereiche eines Blechs oder jedes Blechs, das solche Flügelabschnitte aufweist, in Azimutrichtung an beiden Seiten umgebogene abstehende Flügelabschnitte mit Flügelabschnittenden aufweisen. Die Flügelabschnitte sind aufeinander zuweisend umgebogen und können dabei parallel zu den Blechen verlaufen. Das kann derart ausgebildet sein, dass die in Azimutrichtung verlaufenden Flügelabschnittenden einen Abstand zueinander aufweisen, der zwischen 1% und 20% der Erstreckung der Spule in Azimutrichtung in diesem Bereich beträgt, vorteilhaft zwischen 4% und 12%. Dabei können die beiden Flügelabschnitte desselben Blechs jeweils gleiche Länge aufweisen. Ihre Flügelabschnittenden können in etwa auf halber Breite der Spule in Azimutrichtung liegen und einen geringen Abstand zueinander aufweisen, beispielsweise 0,5 mm bis 5 mm.

Die Bleche können auf bekannte Art und Weise miteinander zu dem Blechpaket zusammengefügt bzw. verbunden werden. Dazu können Klebstoffe und/oder Isolierlacke bzw. Backlacke verwendet werden, wie dies üblichen Ausstattungen entspricht. Dies gilt für die innerhalb der Spule verlaufenden Bereiche der Bleche sowie für die Überstandsbereiche, vorteilhaft auch für die Flügelabschnitte. Auch diese Flügelabschnitte sind dann im umgebogenen und zurückgebogenen Zustand wieder wie vorgenannt miteinander verbunden. Vorteilhaft liegen die Bleche selbst, auch mit ihren Überstandsbereichen und mit den Flügelabschnitten, direkt aufeinander auf. So kann ein kompaktes und stabiles Blechpaket geschaffen werden.

In Weiterbildung der Erfindung können die Flügelabschnitte von dem Überstandsbereich des radial äußersten Blechs und/oder des radial innersten Blechs um 180° umgebogen sind und auf diesen Überstandsbereich selbst aufgelegt bzw. aufgedrückt sein. Die Flügelabschnitte von dem Überstandsbereich des benachbarten Blechs, also des radial zweitäußersten Blechs und/oder des radial zweitinnersten Blechs, sind dann auch um insgesamt 180° umgebogen, allerdings mit etwas größerer Weite, wobei sie dann auf die Flügelabschnitte des radial äußersten oder radial innersten Blechs aufgelegt sind. Die Flügelabschnitte von dem Überstandsbereich des wiederum nächsten bzw. des radial drittäußersten Blechs und/oder des radial drittinnersten Blechs sich auch wieder um 180° umgebogen, vorteilhaft mit noch etwas größerer Weite. Dann sind sie auf die Flügelabschnitte des radial zweitäußersten oder radial zweitinnersten Blechs aufgelegt. Dies kann auch für die nächsten benachbarten Bleche gelten.

Es ist möglich, dass jeweils in gleiche Richtung weisende Flügelabschnittenden übereinander liegen, insbesondere in Radialrichtung genau übereinander. Dann kann sich zu den gegenüberliegenden Flügelabschnittenden ein durchgängiger schmaler Spalt ergeben. Alternativ können sie auch abwechselnd mal verlängert und mal verkürzt sein, um so einen durchgängigen schmalen Spalt zu vermeiden bzw. diesen sozusagen in versetzte Spaltabschnitte zu zerteilen.

In alternativer Ausgestaltung der Erfindung können die an einem Ende aus der Spule überstehenden Überstandsbereiche eines Blechs oder jedes Blechs, das Flügelabschnitte aufweist, an nur einer Seite in Azimutrichtung abstehende Flügelabschnitte aufweisen. Diese Flügelabschnitte sind umgebogen und weisen Flügelabschnittenden auf. Diese Flügelabschnitte sind derart um 180° umgebogen, dass die in Azimutrichtung verlaufenden Flügelabschnitte aufeinander liegen bzw. parallel zu den Blechen verlaufen, wobei sie eine Länge aufweisen, die der Erstreckung der Spule in Azimutrichtung in diesem Bereich mit einer Abweichung von +/- 15% entsprechen. Das Flügelabschnittende eines solchen Blechs liegt beim fertigen Blechpaket dann in Radialrichtung in etwa über der Umbiegung des darunterliegenden Blechs, oder in etwa über den Flügelabschnittenden des darunterliegenden Blechs.

In Weiterbildung der Erfindung kann der Flügelabschnitt des Überstandsbereichs des radial äußersten Blechs und/oder des radial innersten Blechs um 180° umgebogen und auf den Überstandsbereich selbst aufgelegt sein. Der Flügelabschnitt von dem Überstandsbereich des radial zweitäußersten Blechs und/oder des radial zweitinnersten Blechs ist um 180° umgebogen und ist auf den Flügelabschnitt des radial äußersten oder radial innersten Blechs aufgelegt. Der Flügelabschnitt von dem Überstandsbereich des radial drittäußersten Blechs und/oder des radial drittinnersten Blechs kann um 180° umgebogen sein und auf den Flügelabschnitt des radial zweitäußersten oder radial zweitinnersten Blechs aufgelegt sein, wobei vorzugsweise die jeweiligen Flügelabschnittenden in Radialrichtung übereinander liegen können. Dies ergibt eine etwas andere Ausbildung als die zuvor genannte, erreicht aber dieselben grundsätzlichen Vorteile des verbesserten und insbesondere radial weiter außen Flusses der Magnetfeldlinien.

In Ausgestaltung der Erfindung können aufeinanderfolgende umgebogene Flügelabschnitte an abwechselnd gegenüberliegenden Enden der Überstandsbereiche der Bleche abstehen und um 180° umgebogen sein, wobei sie auf darunterliegenden Flügelabschnitte eines anderen Blechs aufgelegt sind. Dabei kann vorgesehen sein, dass der Flügelabschnitt von dem Überstandsbereich des radial äußersten bzw. radial innersten Blechs, das selbst einen abstehenden Flügelabschnitt aufweist, auf diesen Überstandsbereich selbst aufgelegt ist.

In allgemeiner Ausgestaltung der Erfindung können die 4 bis 10, vorteilhaft die 2 bis 8, in Radialrichtung ganz außen und/oder in Radialrichtung ganz innen liegenden Bleche jeweils mindestens einen abstehenden und umgebogenen Flügelabschnitt aufweisen, ggf. jeweils zwei Flügelabschnitte pro Überstandsbereich.

In weiterer Ausgestaltung der Erfindung können alle Bleche des Blechpakets mit vorgenannten Überstandsbereichen in Axialrichtung an beiden Enden der Spule aus der Innenöffnung herausstehen. Dabei können an beiden Enden der Spule in Radialrichtung ganz außen und in Radialrichtung ganz innen Bleche mit umgebogenen Flügelabschnitten vorgesehen sein derart, dass in Axialrichtung gesehen die Spule von Blechen samt Überstandsbereichen und Flügelabschnitten überdeckt ist, also sozusagen die Stirnseite bzw. der Wicklungskopf in dieser Radialrichtung bedeckt ist. Dabei kann die Überdeckung 1% bis 20% oder 4% bis 12% der Erstreckung der Spulen in Radialrichtung betragen.

In weiterer Ausgestaltung der Erfindung kann die Spule in Axialrichtung betrachtet im Wesentlichen mehreckig, insbesondere viereckig, vorzugsweise trapezförmig ausgebildet sein, vorteilhaft spiegelsymmetrisch trapezförmig. Dies ist eine übliche und vorteilhafte Form, da sie so an eine Anordnung einer Vielzahl von Spulen in Umfangsrichtung am fertigen Blechpaket angepasst ist. Auch die Blechpakete, insbesondere mit den umgebogenen Flügelabschnitten, können gleich bzw. ähnlich wie die Spulen bzw. trapezförmig ausgebildet sein. Alternativ kann die Spule in Axialrichtung betrachtet verschoben oder verkippt mehreckig bzw. viereckig sein. Das ist eine gängige Methode, um das Drehmomentripple einer Axialflussmaschine zu reduzieren.

In weiterer Ausgestaltung der Erfindung kann vorgesehen sein, dass nur an Überstandsbereichen bzw. an Flügelabschnitten außerhalb der Innenöffnung Faltungen bzw. Umbiegungen vorgesehen sind. So können die Bleche in dieser Innenöffnung möglichst flach und kompakt verlaufen, so dass hier eine möglichst große Dichte der Bleche vorliegt.

In Ausgestaltung der Erfindung kann jedes Blech durchgängig und integral und einstückig ausgebildet sein. Zusätzlich oder alternativ kann in einer Ebene, die rechtwinklig zur Radialrichtung verläuft, nur ein einziges durchgängiges Blech verlaufen, wobei vorteilhaft hier die äußeren Bereiche in Azimutrichtung ausgeschlossen sind, in denen die Flügelabschnitte in Radialrichtung verlaufen nach der ersten Umbiegung um 90° und vor der zweiten Umbiegung um 90°.

Eine erfindungsgemäße Spulenbaugruppe weist eine vorbeschriebene Spule und mindestens ein vorbeschriebenes Blechpaket auf, wobei die Spule auf das mindestens eine Blechpaket aufgebracht ist oder aufgewickelt ist. Dabei weist die Spule eine sich in einer Axialrichtung erstreckende Innenöffnung und darin das mindestens eine Blechpaket auf. Zumindest ein Teil der Bleche des Blechpakets weist Überstandsbereiche auf, vorzugsweise alle Bleche, um damit in der Axialrichtung an mindestens einem Ende der Spule aus der Innenöffnung herauszustehen. Die Bleche stehen an diesem Ende in ihrer Blechebene mit den Überstandsbereichen auch in der Azimutrichtung über die Innenöffnung über und überdecken die Spule. Mindestens ein Blech, das in Radialrichtung ganz außen und/oder ganz innen am Blechpaket angeordnet ist, weist einen Überstandsbereich auf, der an mindestens einem Ende in Azimutrichtung über die Spule verlängert ist mit einem abstehenden Flügelabschnitt, wobei der Flügelabschnitt umgebogen ist und in Azimutrichtung zurück läuft. Dieser umgebogene Flügelabschnitt liegt in Radialrichtung nach radial außen oder nach radial innen außerhalb der Innenöffnung und überdeckt die Spule. Hier kann also ein Teil der Bleche vor dem Wicklungskopf der Spule angeordnet sein wie zuvor beschrieben.

Bei einem Verfahren zur Herstellung eines Blechpakets gemäß der zuvor beschriebenen Erfindung können die Bleche für ein Blechpaket einzeln hergestellt werden, sowohl für einen Stator als auch für einen Rotor. Dabei werden für ein einzelnes Blechpaket die Bleche in 2 Variantengruppen hergestellt, wobei eine erste Variante bzw. Variantengruppe nur Überstandsbereiche aufweist, wobei vorteilhaft die einzelnen Bleche dieser Variante alle unterschiedlich zueinander ausgebildet sind. Eine zweite Variante bzw. Variantengruppe weist Überstandsbereiche mit daran anschließenden Flügelabschnitten auf, wobei vorteilhaft die einzelnen Bleche auch dieser zweiten Variante alle unterschiedlich zueinander ausgebildet sind. In einem Schritt, der vorteilhaft ein vorausgehender Schritt ist, werden alle Bleche der ersten Variante zu einem Stapel zusammengesetzt. In einem weiteren Schritt, der vorteilhaft ein nachfolgender Schritt ist, werden alle Bleche der zweiten Variante an den Stapel der Bleche der ersten Variante angefügt und, je nach Ausgestaltung, danach werden die abstehenden Flügelabschnitte umgebogen. Daraufhin kann das Blechpaket auf bekannte Art und Weise noch verpresst oder thermisch behandelt werden, beispielsweise auch zum Verkleben bzw. festen und dauerhaften Verbinden.

Anschließend kann die Spule auf das mindestens eine Blechpaket aufgewickelt werden. Dies kann auf bekannte Art und Weise erfolgen, und wird nicht dadurch beeinflusst, dass das Blechpaket die fertige Spule in Radialrichtung abdecken bzw. überragen soll, also den Wicklungskopf.

Eine elektrische Maschine gemäß einer ersten Ausgestaltung der Erfindung, die mindestens einen vorbeschriebenen Stator oder ggf. Rotor mit einem erfindungsgemäßen Blechpaket aufweist, ist als Axialflussmaschine ausgebildet. Seine Spulen als Statorspulen sind auf den Blechpaketen als Statorblechpaketen ringförmig umlaufend angeordnet, entsprechend auch Rotorspulen. Dabei grenzt der mindestens eine Rotor der elektrischen Maschine in Axialrichtung der Statorspulen an diese Statorspulen an. Eine Rotationsachse des Rotors verläuft dabei parallel zu der Axialrichtung. Bevorzugt ist der Rotor auf beiden Seiten des Stators angeordnet, was bekannt ist.

Eine elektrische Maschine gemäß einer zweiten Ausgestaltung der Erfindung, der einen vorbeschriebenen Stator oder ggf. Rotor mit einem erfindungsgemäßen Blechpaket aufweist, ist als Radialflussmaschine ausgebildet. Dabei sind die Spulen als Statorspulen auch als umlaufender Ring bzw. ringförmig angeordnet, entsprechend auch Rotorspulen. Der Rotor der elektrischen Maschine ist radial innerhalb oder ggf. außerhalb des von den Statorspulen gebildeten Rings angeordnet, wobei eine Rotationsachse des Rotors parallel zu der Radialrichtung verläuft.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelnen Abschnitte sowie Zwischen-Überschriften beschränken die unter diesen gemachten Aussagen nicht in ihrer Allgemeingültigkeit.

### KURZBESCHREIBUNG DER ZEICHNUNGEN

Ausführungsbeispiele der Erfindung sind in den Zeichnungen schematisch dargestellt und werden im Folgenden näher erläutert:
- Fig. 1: aneinandergereiht einzelne Bleche als Statorbleche, die zu einem erfindungsgemäßen Blechpaket als Statorblechpaket gestapelt werden, wobei sämtliche Statorbleche unterschiedlich ausgebildet sind,
- Fig. 2: eine Vorderansicht auf einen oberen Bereich eines Statorblechpakets aus Blechen entsprechend Fig. 1 mit spiegelsymmetrischer Ausgestaltung und Überstandsbereichen mit umgebogenen Flügelabschnitten,
- Fig. 3: eine Vorderansicht einer Abwandlung aus Fig. 2, bei der sämtliche Flügelabschnitte einen Umbiegeabschnitt auf derselben Seite aufweisen,
- Fig. 4: eine Vorderansicht einer nochmaligen Abwandlung eines Statorblechpakets, bei der die Umbiegungen gruppenweise auf beiden Seiten verteilt sind,
- Fig. 5: eine Vorderansicht auf eine nochmalige Abwandlung eines Statorblechpakets, bei der die Umbiegungen jeweils abwechselnd vorgesehen sind,
- Fig. 6: eine Schrägansicht eines einzelnen Statorblechpakets einer Spulenbaugruppe mit Statorspule und Angabe der verschiedenen Richtungen,
- Fig. 7: ein Statorblechpaket ohne Statorspule mit Veranschaulichung des Verlaufs der Feldlinien in ausgewählten Bereichen,
- Fig. 8: einen Ausschnitt eines erfindungsgemäßen Stators, von dem nur mehrere in Umfangsrichtung angeordnete Statorblechpakete mit Statorspulen darauf entsprechend Fig. 6 angeordnet sind,
- Fig. 9: die Anordnung für einen Stator aus Fig. 8 mit einem vorderen Rotor und einem hinteren Rotor für eine Axialflussmaschine,
- Fig. 10: einen Bereich einer Abwandlung eines Statorblechpakets für eine Radialflussmaschine, wobei nur an einem Ende des Statorblechpakets Flügelabschnitte zum Umbiegen vorgesehen sind,
- Fig. 11: das Statorblechpaket aus Fig. 10 mit umgebogenen Flügelabschnitten und
- Fig. 12: eine teilweise Darstellung einer Anordnung mehrerer Statorblechpakete entsprechend Fig. 11 im Kreis, um einen Stator für eine Radialflussmaschine zu bilden, allerdings ohne Statorspulen.

### DETAILLIERTE BESCHREIBUNG DER AUSFÜHRUNGSBEISPIELE

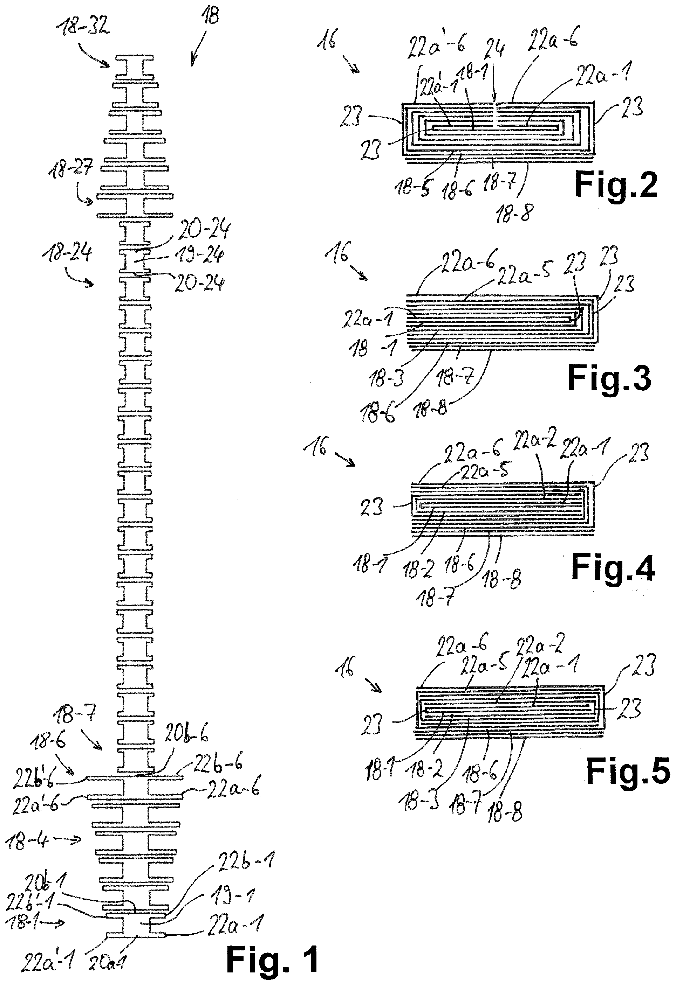

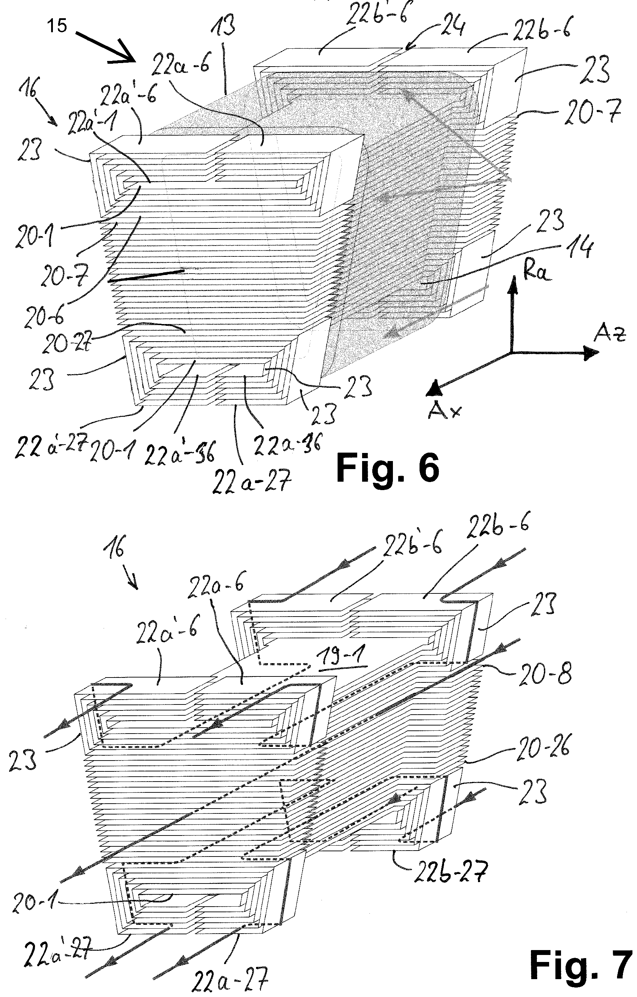

In der Fig. 1 ist eine Aneinanderreihung von einer Vielzahl von Statorblechen 18 dargestellt, die gemeinsam ein Statorblechpaket bilden bzw. zu einem Statorblechpaket zusammengefügt werden, wie es in den Fig. 2, 6 und 7 in Vergrößerung dargestellt ist. Es sind 32 Statorbleche 18-1 ganz unten bis 18-32 ganz oben. Jedes Statorblech 18 weist einen Mittelbereich 19 und an diesen anschließende Überstandsbereiche 20a und 20b auf. Da die Statorspule 13 gemäß der Fig. 6 trapezförmig ausgebildet ist und ebenso auch ihre Innenöffnung 14, und das Statorblechpaket 16 an diese Trapezform angepasst ist, werden die Mittelbereiche 19 vom Statorblech 18-1 ganz unten bis zum Statorblech 18-32 ganz oben schmaler. Es ist zu erkennen, dass die mittlere Gruppe von Statorblechen 18-7 bis 18-26 an den Mittelbereich 19 anschließende Überstandsbereiche 20a bzw. 20a' und 20b bzw. 20b' aufweist, die nach links und rechts den Mittelbereich 19 jeweils nur ein geringes Stück überragen. Dieses Maß entspricht in etwa der Dicke der Statorspule 13, vgl. auch mit Fig. 6.

Die unterste Gruppe von Statorblechen 18-1 bis 18-6 und die oberste Gruppe von Statorblechen 18-27 bis 18-32 weist dagegen Verlängerungen an diesen Überstandsbereichen nach links und rechts auf, welche Flügelabschnitte 22a bzw. 22a' und 22b bzw. 22b' bilden. Diese Flügelabschnitte 22 nehmen in ihrer Länge von jeweils ganz außen nach innen entlang der Reihe zu.

Die Vorderansicht eines oberen Bereichs des fertigen Statorblechpakets 16 aus der Fig. 2, bei der zur besseren Veranschaulichung die Statorbleche 18 sehr dünn und mit etwas Abstand zueinander dargestellt sind, wie auch in den anderen Darstellungen, zeigt, wie diese Flügelabschnitte 22 umgebogen werden. Das Statorblech 18-6 weist die längsten Flügelabschnitte 22 auf, die nämlich zuerst nach oben mit den Umbiegeabschnitten 23 umgebogen sind, und zwar um etwas weniger als 90° umgebogen sind. Dann sind sie ganz oben um etwas mehr als 90° umgebogen, so dass insgesamt eine Umbiegung von 180° vorliegt, und verlaufen in die wiederum parallelen obersten Bereiche der Flügelabschnitte 22a'-6 und 22a-6. Die Enden der Flügelabschnitte weisen nur einen geringen Abstand zueinander auf und bilden einen Spalt 24. Dieselbe Umbiegung erfolgt mit den Flügelabschnitten 22 der darüberliegenden Statorbleche 18-5 bis 18-1. Dabei ist zu ersehen, dass die umgebogenen und zurück verlaufenden Flügelabschnitte 22a'-1 und 22a-1 auf ihren eigenen Überstandsbereichen aufliegen. Diese Formation wird von den umgebogenen Flügelabschnitten 22a'-2 und 22a-2 des darunterliegenden Statorblechs 18-2 umgriffen. Dies setzt sich eben fort, und das äußerste umgreifende Teil besteht aus den vorgenannten Flügelabschnitten 22a'-6 und 22a-6 des Statorblechs 18-6.

Am anderen Ende des Statorblechpakets 16 erfolgt mit den Statorblechen 18-27 bis 18-32 dasselbe Muster. Wie die Fig. 6 zeigt, ist hier aufgrund der vorgegebenen Trapezform der Statorspulen 13 die Breite etwas geringer.

Durch den jeweiligen Abstand der aufeinander zuweisenden Enden der Flügelabschnitte 22 ist ein durchgehender schmaler Spalt 24 gegeben. Soll dieser Spalt 24 aus unterschiedlichen Gründen vermieden werden, so kann entweder die Länge der Flügelabschnitte von aufeinanderfolgenden Statorblechen etwas variiert werden oder eine der anderen Konfigurationen der Fig. 3 bis 5 gewählt werden. Bei der Fig. 3 geht erkennbar nur von einem seitlichen Ende eines Überstandsbereichs 20 ein Flügelabschnitt 22 ab, der dafür deutlich länger ist. Vom Statorblech 18-6 steht also ein langer Flügelabschnitt 22a-6 ab, der zuerst am Umbiegeabschnitt 23 nach oben verläuft und dann wieder nach links verläuft. Etwas innerhalb davon verläuft der Flügelabschnitt 22a-5 des Statorblechs 18-5, und so weiter. Am innersten liegt das Statorblech 18-1 mit dem kürzesten Flügelabschnitt 22-1, der auch nur als einziger Flügelabschnitt vorgesehen ist und nur einmal sozusagen direkt um 180° umgebogen ist, um auf den Überstandsbereich 20-1 aufgelegt zu werden.

In der Fig. 4 ist eine Abwandlung der Anordnung aus Fig. 3 zu sehen. Hier sind die Statorbleche 18-6, 18-5 und 18-4 ausgebildet wie in Fig. 3. Die drei darüberliegenden Statorbleche 18-3, 18-2 und 18-1 dagegen sind sozusagen gespiegelt ausgebildet, hier gehen die Flügelabschnitte 22 von der anderen Seite ab. Auch hier wird ein Spalt 24 entsprechend der Fig. 2 vermieden.

In der Fig. 5 ist sozusagen eine Weiterentwicklung der Anordnung der Fig. 4 dargestellt. Hier wechselt ausgehend vom obersten Statorblech 18-1 jeweils die Seite, von der bzw. an welcher ein abstehender Flügelabschnitt 22 angeordnet ist. Somit umgeben sich die jeweiligen Flügelabschnitte 22 in abwechselnden Richtungen.

Zu beachten ist bei den Darstellungen der Fig. 2 bis 5, dass das oberste Statorblech 18-1 bis auf die abgebogenen Flügelabschnitte 22-1 mit seiner Ebene durch die Innenöffnung 14 der Statorspule 13 verläuft. Diese Flügelabschnitte 22-1 und alle Flügelabschnitte darüber liegen über dieser Ebene, die der Oberseite der Innenöffnung 14 entspricht und somit oberhalb der Innenöffnung 14 und vor dem Wicklungskopf der Statorspule 13. In ähnlicher Form bzw. gespiegelt sind die untersten Statorbleche ausgebildet.

In der Gesamtansicht der Fig. 6 ist eben für das fertige Statorblechpaket 16 bzw. eine Spulenbaugruppe 15 mit Statorspule 13 und Innenöffnung 14 darauf auch eingezeichnet, in welche Richtungen die Radialrichtung, die Axialrichtung und die Azimutrichtung verlaufen. Vorteilhaft kann vorgesehen sein, dass die Fläche des Statorblechpakets 16 die Statorspule 13 gerade überdeckt, an den vier leicht spitz ausgebildeten Enden natürlich etwas stärker. Hier könnten die Flügelabschnitte 22 auch etwas rundlicher oder in zwei oder drei Stufen um den Winkel von mehr als 90° umgebogen sein, um eben die spitzen Eckbereiche zu reduzieren oder zu vermeiden. Auch eine vollständige kontinuierliche bzw. gleichmäßige Biegung um 180° mit einem vorgegebenen Biegeradius, der größer als eine Blechdicke ist, ist möglich. Der Biegeradius müsste dann in jeder Blechebene bzw. für jedes Blech unterschiedlich gewählt werden.

In der Fig. 7 ist dargestellt, wie die magnetischen Feldlinien an einigen Bereichen durch das Statorblechpaket 16 verlaufen. Gestrichelt dargestellt ist ihr Verlauf jeweils innerhalb des Statorblechpakets 16 bzw. innerhalb eines Statorblechs 18 bzw. in der Innenöffnung 14, durchgezogen außerhalb davon. Durch ihren kurzen Verlauf in Radialrichtung, der durch die umgebogenen und sozusagen aufeinandergestapelten Flügelabschnitte 22 erreicht wird, welche hier zusätzlich Material zur Feldlinienführung schaffen, wird die Vergrößerung des Luftspalts bewirkt.

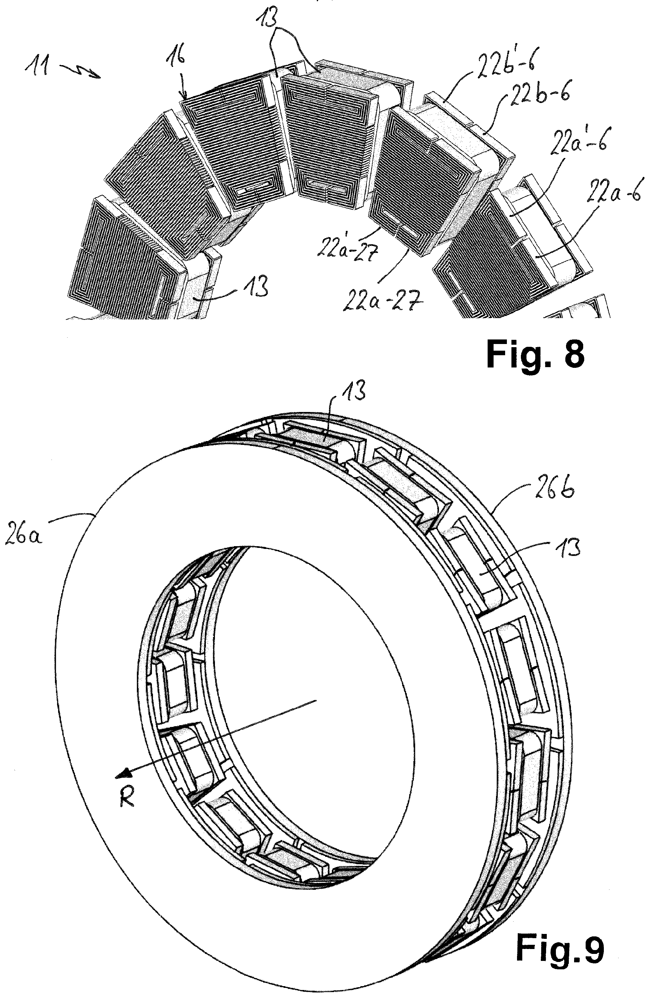

In der Fig. 8 ist für einen Stator 11 einer Axialflussmaschine eine Anordnung mehrerer Statorblechpakete 13 mit Statorspulen 16 darauf dargestellt. Insgesamt sind sie natürlich kreisförmig angeordnet. Auch hieraus ist noch einmal zu ersehen, dass die Statorblechpakete 16 die Statorspulen 13 nur geringfügig bedecken oder überlappen. Dies ist jedoch bereits ein großer Vorteil im Vergleich zu Statorblechpaketen gemäß dem Stand der Technik, bei welchen in Radialrichtung keine Überlappung möglich ist. Aus dieser Darstellung ist aber in Verbindung mit der Fig. 7 gut zu erkennen, dass gerade radial ganz außen bei noch größerem Radius eine gute Führung der Feldlinien möglich ist, was sich vor allem auf ein stärkeres Drehmoment einer mit diesem Stator 11 aufgebauten Radialflussmaschine auswirkt.

Gemäß Fig. 9 verläuft vor der Anordnung für den Stator 11 gemäß Fig. 8 ein vorderer Rotor 26a. Auf der anderen Seite verläuft ein hinterer Rotor 26b. Durch die mittlere Öffnung hindurch verläuft die Rotationsachse R einer solchen Axialflussmaschine, die hier der Axialrichtung entspricht.

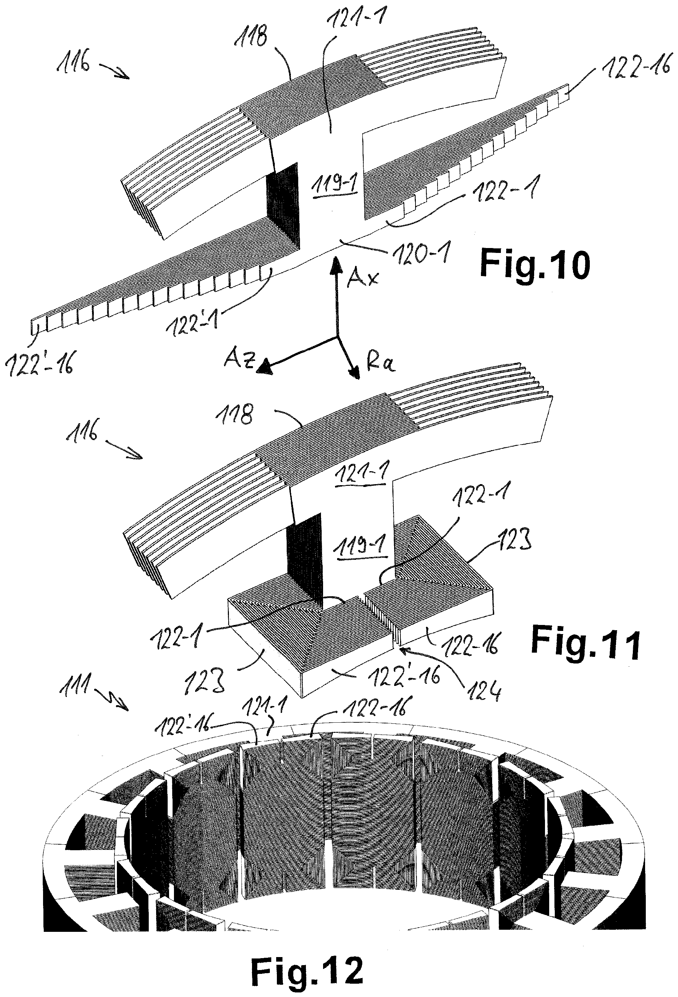

In der Fig. 10 ist ein Statorblechpaket 116 für eine Radialflussmaschine zum Teil dargestellt, welche eine nicht dargestellte Rotationsachse des nicht dargestellten Rotors aufweist, die hier der Radialrichtung entspricht. Es besteht aus Statorblechen 118, die jeweils als Blechpaket aufeinandergestapelt sind. Die einzelnen Statorbleche 118 sind wie allgemein üblich vorteilhaft mit einem elektrisch isolierenden Lack oder Überzug versehen, der auch dazu dienen kann, sie fest zu einem Statorblechpaket 116 zu verbinden. Ein Statorblech 118 bzw. das oberste Statorblech 118-1 weist einen rechteckigen Mittelbereich 119-1 auf. Nach oben steht ein speziell ausgebildeter Überstandsbereich 121-1 ab, der aus dem Stand der Technik bekannt ist. Er kann auf beiden Seiten jeweils kämmend mit dem Überstandsbereich des benachbarten Statorblechpakets verbunden werden, das identisch ausgebildet ist. Am anderen Ende des Mittelbereichs 119-1 steht ein Überstandsbereich 120-1 über, der nach links in einen Flügelabschnitt 122'-1 und nach rechts in einen Flügelabschnitt 122-1 übergeht. Diese Flügelabschnitte 122-1 und 122'-1 werden um 180° nach innen gebogen und auf sich selbst bzw. auf den Überstandsbereich 120-1 aufgelegt, das ergibt wieder einen Spalt 124. Dies zeigt auch die Fig. 11. Ähnlich dem Biegemuster der Fig. 2 werden sämtliche Flügelabschnitte 122 derart umgebogen, dass sich die Gestalt entsprechend Fig. 11 ergibt. Die Flügelabschnitte 122 werden also, ähnlich wie auch bei der zuerst beschriebenen Ausgestaltung, immer an unterschiedlichen Punkten ihrer Länge bzw. einer Länge des Überstandsbereichs umgebogen.

In der Fig. 11 ist zu erkennen, dass ein großer Bereich des Statorblechpakets 116 in Radialrichtung deutlich über die Fläche des Mittelbereichs 119-1 des obersten Statorblechs 118-1 übersteht. Gemäß dem Hinweis auf die verschiedenen Richtungen gemäß Fig. 10 mit Axialrichtung, Azimutrichtung und Radialrichtung ist hier ähnlich wie in Fig. 6 erreicht, dass Statorbleche bzw. leitfähiges Material auch oberhalb der um die Mittelbereiche 119 herumgewickelten Statorspule ist. Dies zeigt die Schrägansicht der Fig. 12 auf einen Teil eines Stators 111 für eine Radialflussmaschine. Hier verläuft eine Rotationsachse der Radialflussmaschine parallel zur Radialrichtung.

Die Erfindung ist in Fig. 8 an einem Stator einer Axialflussmaschine mit separierten Statorkernsegmenten als Statorblechpaketen, also einem Stator ohne Statorjoch, und in Fig. 12 für eine Radialflussmaschine mit Statorjoch, d.h. einem einzigen zusammenhängenden Statorblechpaket, dargestellt. Die Erfindung ist nicht auf diese Anordnungen beschränkt, sondern auch auf Axialflussmaschinen mit zusammenhängendem Stator basierend auf dem Prinzip aus Fig. 11 und auf Radialflussmaschinen mit separiertem Stator basierend auf Segmenten nach Fig. 8 anwendbar.

## Patentansprüche

1. Blechpaket für eine elektrische Maschine mit mindestens einem Rotor und mindestens einem Stator, wobei die elektrische Maschine mindestens eine Spule am Stator oder am Rotor aufweist und diese Spule eine sich in einer Axialrichtung erstreckende Innenöffnung und darin mindestens ein Blechpaket aufweist, wobei das Blechpaket eine Vielzahl von Blechen aufweist, wobei die Bleche in einer Radialrichtung aufeinandergestapelt sind um jeweils eine Spule um jeweils mindestens ein Blechpaket herumzuwickeln bzw. darum zu verlaufen, wobei:
- eine Azimutrichtung senkrecht zur Axialrichtung und zur Radialrichtung verläuft,
- zumindest ein Teil der Bleche des Blechpakets Überstandsbereiche aufweist, um damit in der Axialrichtung an mindestens einem Ende der Spule aus der Innenöffnung herauszustehen,
- die Bleche an diesem Ende in ihrer Blechebene mit den Überstandsbereichen auch in der Azimutrichtung über die Innenöffnung überstehen und die Spule überdecken,
**dadurch gekennzeichnet, dass**:
- mindestens ein Blech, das in Radialrichtung ganz außen und/oder ganz innen am Blechpaket angeordnet ist, einen Überstandsbereich aufweist, der an mindestens einem Ende in Azimutrichtung über die Spule verlängert ist mit einem abstehenden Flügelabschnitt, wobei der Flügelabschnitt umgebogen ist und in Azimutrichtung zurück läuft,
- dieser umgebogene Flügelabschnitt in Radialrichtung nach radial außen oder nach radial innen außerhalb der Innenöffnung liegt und die Spule überdeckt.

2. Blechpaket nach Anspruch 1, **dadurch gekennzeichnet, dass** mindestens ein radial äußeres Blech und mindestens ein radial inneres Blech an beiden Überstandsbereichen in Axialrichtung jeweils mindestens einen abstehenden Flügelabschnitt aufweist mit der Umbiegung und dem Verlauf zurück, wobei vorzugsweise zwischen 5% und 25% der radial äußeren und/oder der radial inneren Bleche an beiden Überstandsbereichen jeweils mindestens einen abstehenden Flügelabschnitt aufweisen mit der Umbiegung und dem Verlauf zurück.

3. Blechpaket nach Anspruch 1 oder 2, **dadurch gekennzeichnet, dass** die an einem Ende aus der Spule überstehenden Überstandsbereiche eines Blechs oder jedes Blechs, das Flügelabschnitte aufweist, in Azimutrichtung an beiden Seiten umgebogene abstehende Flügelabschnitte mit Flügelabschnittenden aufweisen, wobei die Flügelabschnitte aufeinander zuweisend umgebogen sind derart, dass die in Azimutrichtung verlaufenden Flügelabschnittenden einen Abstand zueinander aufweisen zwischen 1% und 20% der Erstreckung der Spule in Azimutrichtung in diesem Bereich, wobei vorzugsweise die Flügelabschnitte desselben Blechs gleiche Länge aufweisen und ihre Flügelabschnittenden in etwa auf halber Breite der Spule in Azimutrichtung liegen.

4. Blechpaket nach Anspruch 3, **dadurch gekennzeichnet, dass** die Flügelabschnitte von dem Überstandsbereich des radial äußersten Blechs und/oder des radial innersten Blechs um 180° umgebogen sind und auf diesen Überstandsbereich selbst aufgelegt sind, wobei die Flügelabschnitte von dem Überstandsbereich des radial zweitäußersten Blechs und/oder des radial zweitinnersten Blechs um 180° umgebogen sind und auf die Flügelabschnitte des radial äußersten oder radial innersten Blechs aufgelegt sind, wobei die Flügelabschnitte von dem Überstandsbereich des radial drittäußersten Blechs und/oder des radial drittinnersten Blechs um 180° umgebogen sind und auf die Flügelabschnitte des radial zweitäußersten oder radial zweitinnersten Blechs aufgelegt sind, wobei vorzugsweise jeweils in gleiche Richtung weisende Flügelabschnittenden übereinander liegen.

5. Blechpaket nach Anspruch 1 oder 2, **dadurch gekennzeichnet, dass** die an einem Ende aus der Spule überstehenden Überstandsbereiche eines Blechs oder jedes Blechs, das Flügelabschnitte aufweist, an nur einer Seite in Azimutrichtung abstehende Flügelabschnitte aufweisen, die umgebogen sind und Flügelabschnittenden aufweisen, wobei die Flügelabschnitte um 180° umgebogen sind derart, dass die in Azimutrichtung verlaufenden Flügelabschnitte aufeinander liegen bzw. parallel zu den Blechen verlaufen und eine Länge aufweisen entsprechend der Erstreckung der Spule in Azimutrichtung in diesem Bereich +/- 15%, wobei vorzugsweise der Flügelabschnitt von dem Überstandsbereich des radial äußersten Blechs und/oder des radial innersten Blechs um 180° umgebogen ist und auf den Überstandsbereich selbst aufgelegt ist, wobei der Flügelabschnitt von dem Überstandsbereich des radial zweitäußersten Blechs und/oder des radial zweitinnersten Blechs um 180° umgebogen ist und auf den Flügelabschnitt des radial äußersten oder radial innersten Blechs aufgelegt ist, wobei der Flügelabschnitt von dem Überstandsbereich des radial drittäußersten Blechs und/oder des radial drittinnersten Blechs um 180° umgebogen ist und auf den Flügelabschnitt des radial zweitäußersten oder radial zweitinnersten Blechs aufgelegt ist, wobei vorzugsweise die jeweiligen Flügelabschnittenden übereinander liegen.

6. Blechpaket nach Anspruch 5, **dadurch gekennzeichnet, dass** aufeinanderfolgende umgebogene Flügelabschnitte an abwechselnd gegenüberliegenden Enden der Überstandsbereiche der Bleche abstehen und um 180° umgebogen sind und auf darunterliegenden Flügelabschnitte aufgelegt sind, wobei der Flügelabschnitt von dem Überstandsbereich des radial äußersten bzw. radial innersten Blechs, das selbst einen Flügelabschnitt aufweist, auf den Überstandsbereich selbst aufgelegt ist.

7. Blechpaket nach einem der vorhergehenden Ansprüche, **dadurch gekennzeichnet, dass** die 4 bis 10 in Radialrichtung ganz außen und/oder in Radialrichtung ganz innen liegenden Bleche abstehende und umgebogene Flügelabschnitte aufweisen.

8. Blechpaket nach einem der vorhergehenden Ansprüche, **dadurch gekennzeichnet, dass** alle Bleche des Blechpakets mit Überstandsbereichen in Axialrichtung an beiden Enden der Spule aus der Innenöffnung herausstehen, wobei an beiden Enden der Spule in Radialrichtung ganz außen und in Radialrichtung ganz innen Bleche mit umgebogenen Flügelabschnitte vorgesehen sind derart, dass in Axialrichtung gesehen die Spule von Blechen samt Überstandsbereichen und Flügelabschnitten überdeckt ist, wobei insbesondere die Überdeckung 1% bis 20% der Erstreckung der Spulen in Radialrichtung beträgt.

9. Blechpaket nach einem der vorhergehenden Ansprüche, **dadurch gekennzeichnet, dass** die Spule in Axialrichtung gesehen viereckig ausgebildet ist, vorzugsweise trapezförmig ausgebildet ist, insbesondere spiegelsymmetrisch trapezförmig, und auch die Blechpakete, insbesondere mit den umgebogenen Flügelabschnitten, trapezförmig ausgebildet sind.

10. Blechpaket nach einem der vorhergehenden Ansprüche, **dadurch gekennzeichnet, dass** die Blechpakete mit den umgebogenen Flügelabschnitten die Spule in radialer Richtung nach innen und/oder nach außen überragen, insbesondere um 1 % bis 20 % der radialen Erstreckung der Spulen.

11. Blechpaket nach einem der vorhergehenden Ansprüche, **dadurch gekennzeichnet, dass** jedes Blech durchgängig und integral und einstückig ist und/oder dass in einer Ebene, die senkrecht zur Radialrichtung verläuft, nur ein einziges durchgängiges Blech verläuft.

12. Spulenbaugruppe mit einer Spule und mit mindestens einem Blechpaket nach einem der vorhergehenden Ansprüche, wobei die Spule auf das mindestens eine Blechpaket aufgebracht ist oder aufgewickelt ist, wobei die Spule eine sich in einer Axialrichtung erstreckende Innenöffnung und darin das mindestens eine Blechpaket aufweist, zumindest ein Teil der Bleche des Blechpakets Überstandsbereiche aufweist, um damit in der Axialrichtung an mindestens einem Ende der Spule aus der Innenöffnung herauszustehen, wobei die Bleche an diesem Ende in ihrer Blechebene mit den Überstandsbereichen auch in der Azimutrichtung über die Innenöffnung überstehen und die Spule überdecken,
**dadurch gekennzeichnet, dass**:
- mindestens ein Blech, das in Radialrichtung ganz außen und/oder ganz innen am Blechpaket angeordnet ist, einen Überstandsbereich aufweist, der an mindestens einem Ende in Azimutrichtung über die Spule verlängert ist mit einem abstehenden Flügelabschnitt, wobei der Flügelabschnitt umgebogen ist und in Azimutrichtung zurück läuft,
- dieser umgebogene Flügelabschnitt in Radialrichtung nach radial außen oder nach radial innen außerhalb der Innenöffnung liegt und die Spule überdeckt.

13. Verfahren zur Herstellung eines Blechpakets nach einem der Ansprüche 1 bis 11, **dadurch gekennzeichnet, dass** einzelne Bleche hergestellt werden, wobei für ein einzelnes Blechpaket die Bleche in 2 Varianten hergestellt werden, wobei eine erste Variante nur Überstandsbereiche aufweist und eine zweite Variante Überstandsbereiche mit daran anschließenden Flügelabschnitten aufweist, wobei:
- in einem Schritt alle Bleche der ersten Variante zu einem Stapel zusammengesetzt werden,
- in einem weiteren Schritt alle Bleche der zweiten Variante an den Stapel der Bleche der ersten Variante angefügt werden und, je nach Ausgestaltung, danach die abstehenden Flügelabschnitte umgebogen werden.

14. Elektrische Maschine mit einem Blechpaket nach einem der Ansprüche 1 bis 11 oder mit mindestens einer Spulenbaugruppe nach Anspruch 12 und mit einem Stator und mit mindestens einem Rotor, **dadurch gekennzeichnet, dass** die elektrische Maschine als Axialflussmaschine ausgebildet ist und Spulen mit dem Blechpaket ringförmig umlaufend angeordnet sind, wobei der Rotor der elektrischen Maschine in Axialrichtung der Spulen an diese Spulen angrenzend angeordnet ist, wobei eine Rotationsachse des Rotors parallel zu der Axialrichtung verläuft.

15. Elektrische Maschine mit einem Blechpaket nach einem der Ansprüche 1 bis 11 oder mit mindestens einer Spulenbaugruppe nach Anspruch 12 und mit einem Stator und mit einem Rotor, **dadurch gekennzeichnet, dass** die elektrische Maschine als Radialflussmaschine ausgebildet ist und die Spulen mit dem Blechpaket als Ring umlaufend angeordnet sind, wobei der Rotor der elektrischen Maschine radial innerhalb oder ggf. außerhalb des von Statorspulen gebildeten Rings angeordnet ist, wobei eine Rotationsachse des Rotors parallel zu der Radialrichtung verläuft.
